# EUROPEAN PATENT APPLICATION

(11) **EP 3 442 088 A1**
(43) Date of publication of application: **13.02.2019**
(21) Application number: 18188336.4
(22) Date of filing: 09.08.2018
(51) Int. Cl.: H02H 1/00, H02H 3/04, H02H 3/08

(54) **ELECTRIC SAFETY AND MONITORING DEVICE**

(30) Priority: 09.08.2017 IT 201700092128
(71) Applicant: Fabbro, Gianfranco, 33020 Claut (PN) (IT)
(72) Inventor: Fabbro, Gianfranco, 33020 Claut (PN) (IT)
(74) Representative: Citron, Massimiliano

(57) **Abstract**

An electrical safety and monitoring system is described, capable of real time monitoring for one or more electric loads, thus facilitating spotting faults and at the same time bringing electrical safety for both the operators and the machines.

## Description

The invention refers - in general - to a civil and industrial electrical monitoring and safety system.

When an electrical fault occurs which triggers the safety devices of the electrical panel, there start the difficulties to isolate the fault. For an electrical fault, it may take hours of work and many attempts to identify the malfunction, without having absolute certainty of it, especially in certain work environments, due to the complexity or inhomogeneity of the applied loads.

Usually the loads are connected to a local electrical network, downstream a life-saver circuit breaker coupled generally to a magneto-thermic device.

In the event of a fault, they do not intervene interrupting the circuit selectively only on the offending load, but simply they remove the common power supply, blocking the work of all that is placed downstream of the duo circuit breaker/magneto-thermic device. The coming scenario is a production and/or service stop, which goes on until the failure is resolved. The problem when having so many machines is always to understand what the culprit is if one does not have certain clues. The scenario gets worse if, for example in the case of refrigerators or refrigerated systems which switch on and off autonomously, the fault occurs at unpredictable times and /or in pseudo-random manner.

It may take a long time to figure out exactly what is causing the failure.

It is then desired to remedy to one or more of these problems, with a system and/or method according to the appended claims, in which the dependent ones define advantageous variants.

The device solves the problem of the prior art by monitoring physical variables for the watched load and intervenes in the event of a malfunction, generates reports in real time on the operation and/or the failure of the load.

In particular, the device solves the problem of the prior art because it monitors the electrical loads applied to it and intervenes in the event of a malfunction, generates reports in real time on the operation and/or on the failure of the electric load.

The electrical safety device for an electric load powered by a line, comprises:
a microcontroller,
a sensor connected to the microcontroller for detecting a physical (e.g. electrical) quantity on the line,
a memory for saving digital data generated by the microcontroller,
a data-interface board capable of accessing the data in the memory and making them available to a request from a remote device,
the microcontroller being programmed for performing by the sensor periodic acquisitions by sampling the quantity (e.g. The electrical one on the bifilar line), and transforming the acquisitions into digital data and storing them in the memory to build a time archive of the quantity.

To make the data collected by the microcontroller accessible from the outside, it is e.g. programmed for
recognizing a request from the remote device of data contained in the memory,
searching for the required data in the memory, and
driving the interface board to transmit the data to a remote user or device.

Or the data contained in the memory have already been organized by the microcontroller and the data interface board takes care of managing the communication with a user or remote device.

Or the data contained in the memory are organized by the data interface board, which also deals with managing the communication with a remote user or device.

The said sensor must not be strictly a detector of electrical quantity. In fact, the load can be monitored also or only via e.g. a temperature and/or pressure and/or heat sensor or other. E.g. the said sensor may also or only be
a hygroscopic sensor, to monitor environmental parameters or the condition of refrigerating chambers; and/or
a hydrostatic sensor for measuring the level of a liquid, and/or
a thermocouple, to measure the temperature of an environment or the level of heating of a motor.

The microcontroller may be battery powered and/or powered via a photovoltaic cell, to avoid data loss during a black-out.

Another aspect of the invention relates to a software program executed by the microcontroller to perform one or each of the functions described here.

Another aspect of the invention relates to a software program executed by a remote microprocessor to make it perform the described function of reading and/or receiving the data contained on the data interface board. E.g. this software program is an app that can be run by a smartphone.

According to the microcontroller's computing power on board the device, the microcontroller may acquire the data and also use them to create an interface/application that is directly usable from the outside. Or the microcontroller takes care only of collecting the data from the sensors, saving them, and subsequently transmitting them to other, while a second program or external board collects these data, processes them and makes them available in all the required forms or modes (text, graphics, scoreboard, database, etc.). This second program may be an application for smartphone and/or an application on a PC, either local or remote, or a program running in said data interface board.

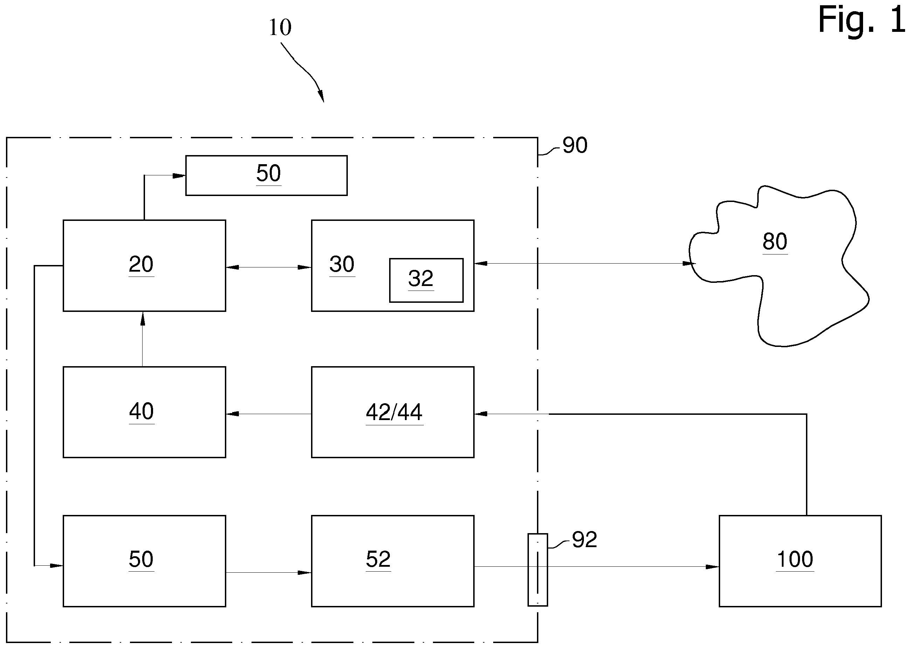

The advantages of the invention will be clearer from the following description of a preferred embodiment of a safety device, referring to the attached drawing in which
- Fig. 1 shows a block diagram of the device.

In the figure the arrows indicate the direction of a signal line.

The logic scheme of a device 10 is shown in FIG. 1, and has a load 100 monitored by a microcontroller 20 which embeds an intelligence.

The microcontroller 20 is e.g. an ARM Cortex, and through the execution of a program acts to control all the remaining components connected to it.

The microcontroller 20 is connected to a communication board 30, to an input board 40 which receives data from sensors installed on various loads 100, and to an output card 50 capable of driving the devices available to the microcontroller 20 to operate on the electric line. It is also present (not shown) e.g. a system RAM memory and a non-volatile ROM memory, for storing the microcontroller 20's program.

The microcontroller 20 may monitor a plurality of loads 100, not just one.

The board 30 gives the system the ability to connect to the outside, and preferably consists of or comprises an Ethernet card, which gives the system the ability to connect to the external via a network, in particular a *cloud* 80, e.g. to a router via a network cable or to a WI-FI hotspot, or directly to another computer.

The board 30 preferably comprises or is associated with a data memory 32, e.g. an SD card, so as to become an external memory unit of the microcontroller 20, which saves there all the significant data of the electric load 100.

In this way it is possible to provide an external remote application which, by taking the data processed by the microcontroller 20, accesses the events of the system in the memory 32 and makes them usable e.g. in the cloud 80. E.g. via smartphone or a web application or a web server it is possible to access the data of the memory 32.

The input board 40 is equipped with sensors, among which
a current sensor 42, e.g. a Hall effect sensor, for measuring the current flowing on a load 100, and/or
a voltage transformer 44, for measuring the voltage on a load 100; and/or in general analog or digital inputs to monitor electrical quantities of the load 100; and/or
sensors to detect a non-electrical quantity, e.g. a temperature sensor. E.g. by inserting the temperature sensor into a refrigerator 30, the microcontroller 20 may generate an alarm if the temperature drops/rises above a certain limit.

The current sensor 42 measures the current on the phase and on the neutral wire of a load 100, or in general on one or each of its phases (the load could three-phase). The transformer 44 measures the voltage across the load 100, on one or every phase thereof.

The output board 50 comprises an electrically controllable switch 52 for disconnecting the load 100 from the power supply. E.g. the switch is mechanical, like a relay, or is an electronic switch, like a MOSFET or SCR. The switch 52 is normally closed, that is to say that in normal state the passage of current on the load 100 is allowed.

To improve and simplify the management of the device 10, the microcontroller 20 is preferably provided with
a screen or LCD display 70 to show system information , and/or navigation buttons (not shown), used to navigate system menus or to enter commands to the microcontroller 20.

The microcontroller 20 detects the values emitted by the sensors 42, 44 and its program processes them. E.g. upon having the voltage and current data, the microcontroller 15 can calculate the power absorbed by the load 100. By comparison with programmed thresholds, the microcontroller 20 checks for example if there are different currents between a phase and neutral, if there is an overcurrent or overvoltage, or if there are dispersions to earth (in order to avoid the dangerous event of having, for example, the casing of a machine subjected to voltage). In the event of an anomaly, the microcontroller 20 intervenes by opening the electrical switch 52 to isolate the load 100.

The microcontroller 20 not only drives the electrical switch 52 to isolate the load 100, but when an anomaly or failure occurs it saves the data in the memory 32, to have system historical data and errors.

Preferably, the microcontroller 20 periodically saves the acquired data in the memory 32, not only when it detects a fault; thus the memory 32 contains a data archive of the total operation of the load 100. A remote user, by accessing the data in the memory 32, will thus be informed about the status over time of the load 100, both in case of failure and in normal operation. In fact, the microcontroller 20 can e.g. also enrich the memory 32 with operating data relating to the load 100, such as e.g.
consumption, and/or
service graphs, and/or
dates and times of operation or shutdown, and/or
trends of current and voltage over time.

To detect dates and times of operation or shutdown, the microcontroller 20 is e.g. equipped with or connected to a timer, and/or is equipped with a GPS connection.

To detect the trend of current and voltage over time on a load, the microcontroller 20 is e.g. equipped with or connected to an ADC converter, to whose input the analog signals of the sensors present on the board 40 are brought.

In general the device 10 may allow to process the data taken by the sensors in order to create a useful information database for the user.

The microcontroller 20 may be programmed to generate reports or databases in real time on the operation and/or on the failure of the electric load 100. The *report* constitutes a history of what happened and is kept in the memory 32. The user, consulting remotely the report (i.e. reading the data of the memory 32), has a vision of what happened over time to the electric load 100, and the diagnostic and recovery operations are much faster.

The *report* may be consulted in various ways, e.g.
from a control unit which controls various devices 10 used on various loads 100, and/or
on board the device 10 by means of the display 70, and/or
by reading it from an electronic support after withdrawal thereof from the memory 32; and/or
accessing the memory 32 from the *cloud* 80.

The device 10 can advantageously be applied to both civil and industrial systems. It solves the problem of understanding which load is faulty among several loads served by the same circuit breaker; as well as intervening in less time than the standard circuit breaker. The problem of searching faults is solved because the device 10 indicates where the problem is and its nature, where possible.

In the case of several machines served by the same circuit breaker, the device 10 allows continuity of operation of the other loads by isolating only that which is faulty or malfunctioning.

Another advantage of the device 10 is that it can be easily integrated into already existing devices, e.g. by being contained inside a socket or inside the equipment to be monitored. In the figure is e.g. shown in broken lines, a casing that contains the components and is equipped with a two-pole or three-pole socket 92 for a plug which supplies the load 100 via cable. Or the device 10 is, for example, mounted inside a two-pole or three-pole plug to be connected to an electrical socket.

Another advantage of the device 10 is that it costs less than a single circuit breaker to be mounted on more than one line.

Another advantage of the device 10 is that it can monitor several loads at the same time, while a commercial circuit breaker/magneto-thermic device is installed on each machine and costs a lot.

The microcontroller 20 is preferably programmed to send an alarm in the event of a fault. For this purpose the microcontroller 20 may use the Ethernet card 30 to send an email or SMS, through an optional (not shown) GSM transmitter. Think about the case of a nighttime failure and on a conservation cell for fresh elements: a message on the phone can really save the product.

As it can be appreciated, the device solves the problems of:
- energy interruption in large sectors or on more loads served downstream the same circuit breaker/magneto-thermic device;
- lower intervention times compared to standard circuit breakers/magneto-thermal circuit;
- searching for faults, as it indicates perfectly where the fault is and its nature.

## Claims

1. Electrical safety device (10) for an electric load (100) powered by a line, comprising:
a microcontroller (20),
a sensor (52) connected to the microcontroller for detecting an electrical quantity on the line and/or a physical quantity relative to the load,
a memory (32) for saving digital data generated by the microcontroller,
a data-interface board (30) capable of accessing the data in the memory and making them available to a remote request,
the microcontroller being programmed for performing by the sensor periodic acquisitions by sampling the quantity, and transforming the acquisitions into digital data and storing them in the memory to build a time archive of the quantity.

2. Device (10) according to claim 1, wherein the quantity is the current that passes through the load and/or the voltage at the terminals of the load.

3. Device (10) according to claim 1 or 2, wherein the data-interface board (30) comprises or consists of a cabled Ethernet board and/or a radio transceiver.

4. Device (10) according to any one of the preceding claims, wherein the microcontroller is programmed to overwrite the data in the memory (32) after a programmed time and/or when the memory is occupied by data for more than a programmed threshold.

5. Device (10) according to any one of the preceding claims, comprising a GSM transmitter, and wherein the microcontroller is programmed to send an alarm to a remote user via the GSM transmitter if through the sensor it determines a fault condition on the load.

6. Device (10) according to any one of the preceding claims, wherein the microcontroller is programmed for recognizing a remote request for data contained in memory, searching the data required in the memory (32), and driving the data-interface board (30) to transmit the data to a remote user.

7. Device (10) according to any one of the preceding claims, comprising an electrically controllable switch (52), and wherein the microcontroller is programmed to send a signal to the switch to open it and disconnect the load (100) from the power supply on the line if it determines a fault condition on the load through the sensor (42).

8. Device (10) according to any one of the preceding claims, wherein the device is enclosed in a housing provided on its outer surface with an electrical voltage socket powered by said line, the socket being connectable to a corresponding plug that feeds the load.

9. Device (10) according to any one of the preceding claims 1 to 7, wherein the device is enclosed in a housing provided on its outer surface with an electrical voltage plug connected to said line, the plug being connectable to a corresponding socket.

10. Device (10) according to any one of the preceding claims, comprising a sensor connected to the microcontroller for detecting a physical quantity related to the load, e.g. the temperature and/or a pressure,
and the microcontroller is programmed for performing periodic acquisitions via the sensor by sampling the physical quantity, and transforming the acquisitions into digital data and saving them into the memory to build a time archive of the physical quantity.
